# FASCICULE DE BREVET EUROPEEN

(11) **EP 2 926 510 B1**
(45) Date de publication et mention de la délivrance du brevet: **05.10.2016**
(21) Numéro de dépôt: 13808107.0
(22) Date de dépôt: 25.11.2013
(51) Int. Cl.: H04L 12/58, H04L 29/08, H04M 1/725

(54) **PROCEDE DE COMMUNICATION DE MESSAGES TEXTUELS EN MODE DIFFERE OU TEMPS REEL, DISPOSITIF DE GENERATION ET PROGRAMME D'ORDINATEUR CORRESPONDANTS**
VERFAHREN ZUR KOMMUNIKATION VON TEXTNACHRICHTEN IN VERZÖGERTEM ODER ECHTZEIT-MODUS SOWIE ENTSPRECHENDE GENERIERUNGSVORRICHTUNG UND COMPUTERPROGRAMM
METHOD FOR COMMUNICATING TEXT MESSAGES IN DELAYED OR REAL TIME MODE, AND CORRESPONDING GENERATION DEVICE AND COMPUTER PROGRAMME

(30) Priorité: 30.11.2012 FR 1261474
(43) Date de publication de la demande: 07.10.2015
(73) Titulaire: Orange, 75015 Paris (FR)
(72) Inventeur: GAILLARD, Michel, F-22560 Pleumeur Bodou (FR); GUSTIN, Emmanuel, F-22700 Saint Quay Perros (FR); TOUTAIN, François, F-22700 Louannec (FR)
(74) Mandataire: Vidon Brevets & Stratégie
(86) Numéro de dépôt international: PCT/FR2013/052843
(87) Numéro de publication internationale: WO 2014/083265

(56) Documents cités:
- US-A1- 2008 043 941
- US-A1- 2008 201 438
- US-B1- 7 555 521

## Description

### 1. Domaine de l'invention

Le domaine de la présente invention est celui des communications textuelles entre au moins deux terminaux appartenant à des interlocuteurs. Plus précisément, l'invention concerne le cas où les messages échangés sont constitués de caractères et où les interlocuteurs peuvent saisir, par quelques interfaces que ce soit, leurs textes en même temps.

### 2. Art antérieur

De nos jours, les communications entre les personnes nécessitent une plus grande interactivité et une ergonomie adaptée aux types d'échanges. Les appareils mis en oeuvre peuvent être des téléphones portables, des ordinateurs connectés en réseau, des tablettes sans fil, ou tout appareil de communication connecté à un dispositif d'affichage et possédant un moyen d'acquisition de texte. Pour des échanges de messages textuels, il existe deux modes au moins de communication qui sont divulgués dans US 2008/043 941, US2008/201 438, et US 7 555 521.

Un premier mode de communication appelé « Instant Messaging », qui est par exemple utilisé pour transmettre des messages textuels entre interlocuteurs ou des SMS (acronyme de « Short Message System ») à l'aide de terminaux portables, consiste à élaborer une phrase ou un message et à l'envoyer. La phrase ou le message en entier est transmis plus ou moins vite à travers un réseau et est reçu par le terminal du destinataire. Celui-ci en prend alors connaissance, saisie une réponse et l'envoie. Le premier interlocuteur voit alors la réponse sur son écran et introduit un nouveau message. Selon ce premier type de communication que l'on peut qualifier de différée, l'interlocuteur distant prend connaissance du message lorsque celui-ci a été validé par l'émetteur et envoyé.

Selon ce mode de communication, chaque interlocuteur doit attendre que l'autre termine son message pour en connaître le contenu. Certaines messageries informent visuellement à l'aide par exemple d'une icône apparaissant à l'écran que l'autre interlocuteur est en train de saisir un message. Dans ce cas, le terminal qui reçoit un caractère sur son clavier, envoie un signal indiquant qu'un message est en cours de frappe. Si le code tapé est un code de validation du message qui vient d'être introduit, alors le terminal émet une trame d'information contenant l'ensemble des caractères du message validé. Le signal indiquant qu'un message est en cours de frappe ne fournit pas d'information sur le contenu du message en cours d'introduction. Ce type de communication est assez frustrant car un interlocuteur peut ainsi monopoliser l'attention de son interlocuteur en introduisant constamment de nouveaux messages, ou en saisissant un message très long.

Un second type de communication utilisant la technique du Texte en Temps Réel ou « TTR » en abrégé consiste à transmettre à l'interlocuteur chaque caractère dès son introduction. De cette manière, le destinataire prend immédiatement connaissance du contenu du message en cours d'introduction. Cette seconde solution procure l'impression que l'interlocuteur est tout près et se matérialise sous la forme du texte apparaissant à l'écran. Mais les interlocuteurs, concentrés sur ce qu'ils saisissent, souvent sur une partie de l'écran, ne sont généralement pas à même de lire en même temps les mots et parties de mot apparaissant souvent sur une autre partie de l'écran. Il s'ensuit une désynchronisation du contenu des échanges, contraire à l'effet de dialogue en temps réel recherché. De plus, cette communication utilise beaucoup de bande passante car des messages sont échangés lors de chaque caractère introduit.

Une solution consiste à prévoir une commutation automatique lorsque le terminal du destinataire le permet, ou une commutation manuelle en introduisant une commande. Dans ce cas, la communication commence en différé, le message n'étant envoyé et affiché au destinataire que s'il a été validé par l'émetteur. Si le terminal du destinataire autorise une communication en temps réel, alors ce mode est utilisé et chaque interlocuteur peut connaître ce que l'autre introduit sur son terminal.

Cependant, cette commutation ne prend pas en compte l'interactivité entre les utilisateurs. Dans certains cas, les utilisateurs sont pressés de communiquer et attendre la validation du message pour le voir est une frustration. Il peut aussi arriver qu'au cours du même dialogue, les interlocuteurs acceptent d'attendre la validation du message pour le voir, puis deviennent plus pressés et trouvent cette attente trop pénible.

Il existe donc un besoin pour une nouvelle technique permettant à des interlocuteurs d'échanger des messages textuels en s'adaptant à leurs façons d'introduire les messages tout en optimisant la bande passante consommée par les échanges de données.

### 3. Exposé de l'invention

L'invention propose une solution nouvelle qui ne présente pas l'ensemble de ces inconvénients de l'art antérieur, sous la forme d'un procédé de communication de messages textuels entre au moins un premier et au moins un deuxième terminal connectés par un réseau de communication. Selon un aspect fonctionnel, le procédé comprend un premier mode de communication consistant à transmettre du premier terminal vers un deuxième terminal l'ensemble des caractères d'un message validé. Dans ce mode, la transmission de l'ensemble des caractères est déclenchée par la validation dudit message. Le procédé comporte également un second mode de communication consistant à transmettre du premier terminal vers un deuxième terminal chaque caractère d'un message, lors de son introduction sur le premier terminal. Le second mode de communication intervient en fonction de l'activité du premier terminal et de la réception d'un signal informant de l'activité d'un deuxième terminal.

L'invention propose ainsi d'améliorer l'interactivité pour des programmes de messagerie et d'échange de textes en proposant deux modes de communication et en commutant d'un mode à l'autre en fonction de la façon d'introduire des messages.

Selon un mode particulier de réalisation, le second mode de communication intervient lorsqu'un message est en cours d'introduction sur le premier terminal et consécutivement à la réception d'un signal indiquant l'introduction d'un caractère sur un deuxième terminal. De cette manière, les utilisateurs se rendent mieux compte qu'ils sont en train d'introduire au même moment des messages.

Selon un autre mode de réalisation, le second mode de communication intervient après une durée déterminée au cours de laquelle au moins un autre signal d'activité est reçu par le premier terminal. De cette manière, la commutation d'un mode à l'autre intervient après une durée minimale.

Selon un autre mode de réalisation, l'utilisateur introduit une commande pour commuter le premier terminal du second mode de communication vers le premier mode de communication. De cette manière, l'utilisateur peut forcer le passage d'un mode de communication vers un autre.

Selon un autre mode de réalisation, la commutation du premier terminal du second mode de communication vers le premier mode de communication s'effectue par l'absence de réception de signal d'activité émis par un deuxième terminal lors de l'introduction d'un message en entier. De cette manière, lorsque les interlocuteurs cessent d'introduire des messages en même temps, la communication s'effectue de nouveau selon le premier mode.

Selon un autre mode de réalisation, la commutation du premier terminal du second mode de communication vers le premier mode de communication s'effectue par l'absence de réception de signal d'activité émis par un deuxième terminal pendant une durée déterminée. De cette manière, le retour au premier mode de communication s'effectue lorsque les interlocuteurs cessent pendant au moins une certaine durée d'introduire des messages en même temps,

Selon un autre mode de réalisation, un menu d'introduction de message est affiché comportant une zone affichant les messages en cours d'introduction. Dans le second mode de communication, la zone affiche les caractères introduits sur le premier terminal et les caractères introduits sur un deuxième terminal en les distinguant par une distinction graphique. De cette manière, l'utilisateur perçoit facilement les caractères qu'il introduit des caractères que son interlocuteur introduit sur son terminal.

Selon un autre mode de réalisation, la présentation des caractères dans ladite zone respecte la chronologie de l'introduction des caractères sur le premier terminal et l'introduction des caractères introduits sur un deuxième terminal. De cette manière, l'utilisateur perçoit la chronologie des caractères introduits sur l'un ou l'autre terminal.

Selon un autre mode de réalisation, la commutation du premier mode de communication dans le second mode de communication d'un terminal déclenche l'émission par ce terminal d'un signal indiquant à l'au moins un deuxième terminal de commuter dans le second mode de communication. De cette manière, tous les terminaux communiquent de la même manière et au même moment.

Selon un autre aspect matériel, l'invention propose un terminal de communication comportant un moyen de communication avec au moins un autre terminal à travers un réseau de communication et un moyen d'introduction de caractères pour la création de messages à transmettre à au moins un autre terminal, caractérisé en ce que ledit terminal dispose de deux modes de communication, un premier mode consistant à transmettre l'ensemble des caractères lorsque le message est validé par le moyen d'introduction, un second mode de communication consistant à transmettre chaque caractère lors de son introduction sur le moyen d'introduction, le second mode de communication intervenant en fonction de l'activité du terminal et de la réception d'un signal par le moyen de communication informant de l'activité d'un moins un autre terminal.

Selon un autre aspect matériel, l'invention concerne également un programme d'ordinateur comportant des instructions pour la mise en oeuvre du procédé de communication décrit ci-dessus, lorsque le programme est exécuté par un processeur.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente un exemple d'architecture d'un système dans lequel le procédé selon l'invention est mis en oeuvre,
- la figure 2 illustre un exemple d'apparence d'écran de messagerie selon un mode préféré de réalisation de l'invention,
- la figure 3 montre un exemple d'ordinogramme présentant les étapes d'un procédé de communication de messages textuels selon l'invention,
- la figure 4 illustre un exemple particulier d'apparence d'écran de messagerie selon une variante de réalisation de l'invention.

### 5. Description d'un mode de réalisation de l'invention

### 5.1 Principe général

Le principe général de l'invention repose sur une communication de messages textuels qui au départ, s'échangent en mode différé entre au moins deux terminaux. Dans ce mode, le contenu du message n'est envoyé par son émetteur qu'une fois qu'il est validé. Le message transmis est affiché dès sa réception sur le terminal du destinataire. Au cours de la communication, les terminaux échangeant des messages détectent si des caractères de messages non validés sont introduits sur des terminaux au même moment. Dans ce cas, les terminaux commutent dans un mode dit « temps réel » où chaque caractère ou chaîne de caractère tapé sur un clavier est aussitôt transmis au destinataire du message très peu de temps après leur introduction. Les caractères s'affichent donc en temps réel sur le terminal du destinataire. Avantageusement, une indication visuelle du passage du mode différé au mode temps réel apparaît sur chaque terminal. De même, la présentation sur les écrans des terminaux des caractères introduits sur chaque terminal prend en compte la chronologie de leurs introductions.

Ainsi, l'invention améliore l'interactivité entre les interlocuteurs et optimise la bande passante en commutant entre un mode différé et un mode temps réel au moment opportun.

### 5.2 Description générale d'un mode de réalisation

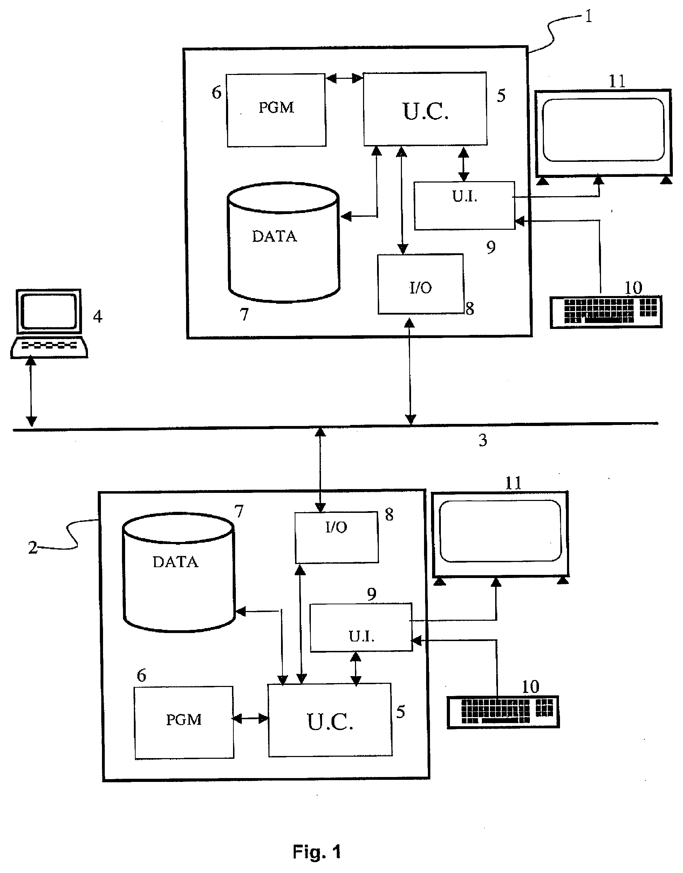

**La** **figure 1** présente un schéma d'un système permettant la communication bidirectionnelle entre au moins deux interlocuteurs. Les principaux éléments de ce système sont :
- un premier terminal 1 appartenant à un premier interlocuteur,
- un second terminal 2 appartenant à un second interlocuteur,
- un réseau 3 permettant le transfert des données entre les terminaux,
- un serveur 4 pour la gestion des transferts.

Le réseau de communication 3 peut être avec ou sans fil, de type Internet par exemple, autorisant les communications par des messages textuels. Les terminaux 1 et 2 peuvent être de type identiques ou différents, ce sont typiquement des téléphones portables, des ordinateurs connectés en réseau, des tablettes sans fil, ou tout appareil de communication connecté à un dispositif d'affichage et possédant un moyen d'acquisition de texte. La figure 1 présente un exemple de réalisation de ces terminaux. De tels terminaux comportent au moins une unité centrale 5 reliée à un module de programme 6 et une mémoire de données 7, qui peuvent être matérialisés par un disque dur. Une interface 8 permet la communication avec le réseau de communication 3, cette interface est gérée par un module de programme stocké dans la mémoire 6.

Les terminaux 1 et 2 possèdent une interface Homme/Machine UI 9 reliée à un clavier 10 et à un écran 11. Le clavier 10 comporte des touches permettant d'introduire des caractères alphanumériques qui, sous la forme d'une chaîne de caractères, constituent un message. Le clavier comporte également une touche de validation, dont la sérigraphie est « ENTER » par exemple, permettant de valider en tant que message, la chaîne de caractères qui vient d'être tapée. Le clavier 10 peut être déporté ou intégré dans le terminal, c'est le cas par exemple si le terminal est un téléphone portable, de même le clavier peut être tactile offrant ainsi la possibilité d'afficher des icones que l'utilisateur peut sélectionner avec l'aide d'une souris. La saisie de caractère et de mot peut être également effectuée à l'aide d'un système de reconnaissance vocale ou de reconnaissance de mouvement. L'écran 11 peut aussi être déporté ou intégré dans le terminal. La gestion de l'écran 11 et du clavier 10, et notamment la génération des menus affichés, s'effectue par un module de programme enregistré dans la mémoire 6. Ces menus apparaissent sur la totalité de l'écran ou dans une fenêtre occupant qu'une partie de l'écran. La génération des menus est intégrée dans le programme de messagerie que l'utilisateur sélectionne à l'aide d'un navigateur d'application. L'interface utilisateur 9 émet des signaux vidéo vers l'écran de visualisation 11 et reçoit des données introduites par l'utilisateur sur le clavier 10.

Le serveur 4 de gestion du réseau est classique en soi et n'a pas besoin d'être détaillé d'avantage.

Après avoir détaillé les différents éléments composant l'invention, nous allons maintenant expliquer comment ceux-ci coopèrent.

### 5.3 Présentation des menus d'introduction de messages

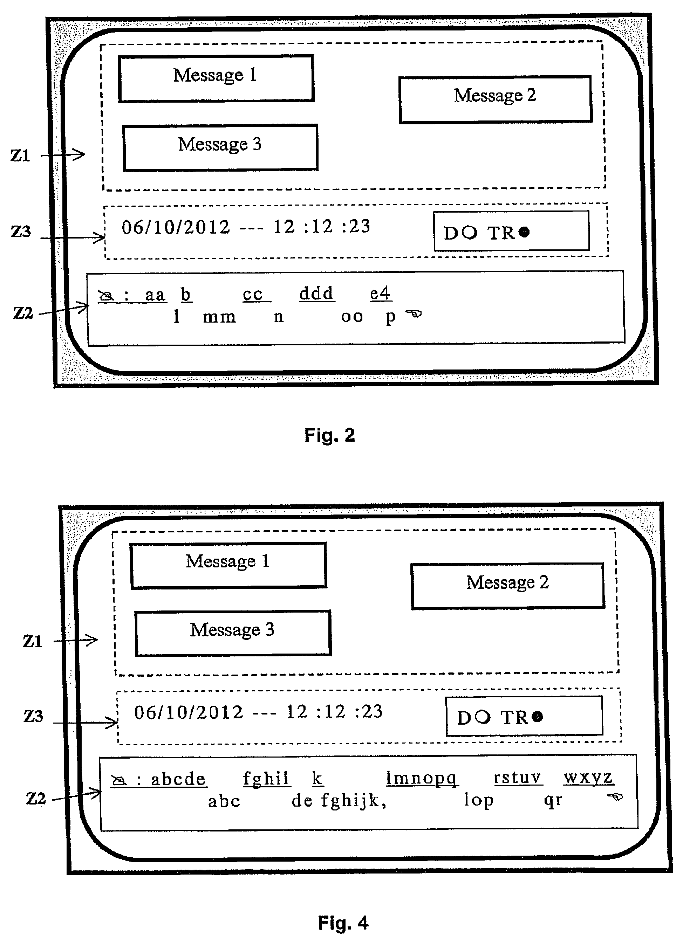

**La** **figure 2** présente un exemple d'apparence d'un menu d'introduction de message conforme à un mode préféré de réalisation de l'invention, les terminaux 1 et 2 étant alors en mode différé. Un tel menu est généré par le programme de messagerie stocké dans la mémoire 6 de programme en combinaison avec l'unité centrale 5 et par l'interface utilisateur 9.

Le menu affiché comporte au moins les trois zones suivantes :
- une zone Z1 d'affichage des messages validés,
- une zone Z2 d'introduction des messages en cours,
- une zone Z3 d'état et de contrôle.

La zone Z1 affiche les messages validés, de préférence sur deux colonnes. La colonne de gauche présente les messages émis par l'utilisateur du terminal. La colonne de droite présente les messages reçus par le ou les interlocuteurs du terminal. S'il existe plusieurs interlocuteurs, chaque message est associé graphiquement à un identificateur de son émetteur, son nom par exemple.

La zone Z2 affiche les deux messages en cours d'introduction. Le menu de la zone Z2 est divisé en deux parties représentées sur la figure 2 par deux lignes, la ligne supérieure permet à l'utilisateur du terminal d'introduire son message, et la ligne inférieure affiche les caractères tapés par son interlocuteur. Selon un mode particulier de réalisation, pour montrer que la ligne supérieure permet à l'utilisateur d'introduire un texte le message est précédé d'une icône et les caractères tapés sont affectés d'une particularité graphique, le soulignement par exemple. L'utilisateur introduit son texte dans la zone Z2 jusqu'à ce qu'il le valide par l'action sur une touche « ENTER » par exemple, ou par la sélection d'une icône.

La ligne inférieure de la zone Z2 permet à l'utilisateur du terminal de prendre connaissance du message que son interlocuteur est en train d'introduire. Selon un mode particulier de réalisation, pour montrer que la ligne supérieure permet à l'utilisateur d'introduire un texte, le message est suivi d'une icône et les caractères tapés peuvent être affectés d'une autre particularité graphique, un clignotement par exemple.

Selon un mode préféré de réalisation, la présentation des caractères des deux lignes prend en compte la chronologie de leurs introductions. Par exemple, les caractères introduits sont affichés de gauche à droite et les uns à la suite des autres en fonction du moment de leur introduction, un seul caractère est présent selon une ligne verticale. En regardant la ligne inférieure de Z2, l'utilisateur voit les caractères que son interlocuteur tapait au moment où lui-même tapait ses propres caractères.

Il va de soi que plusieurs lignes sont affichées si l'utilisateur est en communication avec plusieurs interlocuteurs.

D'autres modes de réalisation sont possibles, par exemple une seule ligne est affichée et l'origine des caractères (soit tapés par l'utilisateur, soit reçus d'un interlocuteur) est identifiée par une couleur ou toute autre distinction graphique.

La zone Z3 permet à la fois d'afficher le mode actuel de communication, d'introduire une commande de changement de mode et d'informer sur des informations générales liées à la communication, la date et l'heure par exemple. Selon l'exemple de la figure 2, la zone Z3 contient deux icônes sélectionnables marquées « D » pour « différé » et « TR » pour « temps réel ». La figure 2 montre un terminal en mode TR.

Il va de soi que la figure 2 présente un exemple de menu et que d'autres façons de représenter les zones décrites précédemment sont possibles.

### 5.4 Présentation des étapes du procédé

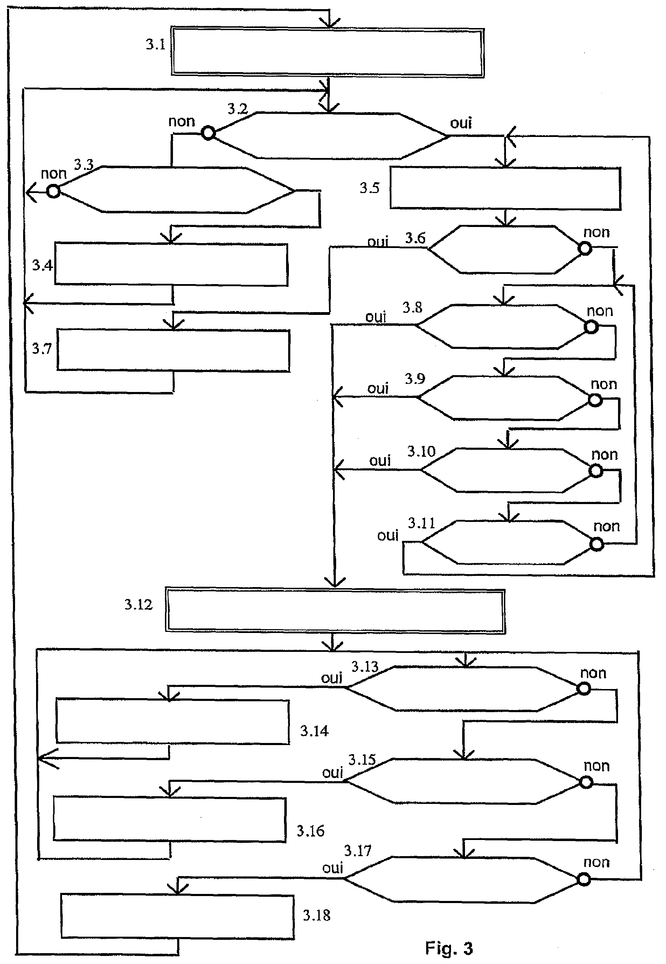

Un exemple de mise en oeuvre du procédé de communication selon l'invention est représenté par l'ordinogramme de **la** **figure 3****.** Chaque étape de ce procédé est précisément décrite ci-après et permet de gérer la communication entre au moins deux interlocuteurs.

Dans un premier temps, l'utilisateur allume son terminal 1 et lance son module de messagerie en choisissant un ou plusieurs interlocuteurs. Le module de messagerie appelle le ou les interlocuteurs et dès que la communication est établie avec un terminal 2, le menu illustré par la figure 2 apparaît sur les écrans avec les zones vierges de messages. A l'étape 3.1, le mode de communication est en différé, en abrégé et pour la suite du document, c'est le « mode D ». Dans ce mode, le terminal 1 n'envoie le contenu d'un message introduit qu'au moment où ce message est validé par un caractère de validation. Puis, à l'étape 3.2, le module de messagerie teste si un premier caractère d'un message est introduit sur le clavier 10 du terminal 1. Si ce n'est pas le cas, le module teste si un message validé est reçu d'un terminal 2 (étape 3.3). Si ce n'est pas le cas, le module reboucle en attente soit d'un caractère introduit au clavier, soit de la réception d'un message provenant d'un terminal 2. Si un message validé est reçu, le module l'affiche en zone Z1 (étape 3.4) et reboucle comme précédemment.

Si à l'étape 3.2 un caractère est introduit par l'utilisateur, le module l'affiche en zone Z2 et émet un signal de travail indiquant l'introduction d'un caractère sur le clavier (étape 3.5). Dans ce mode D, le signal de travail n'a pas besoin de contenir le code du caractère introduit.

A l'étape 3.6, le module de messagerie analyse le caractère introduit par l'utilisateur et le compare à un caractère de validation « ENTER » par exemple. Une variante consiste à valider à la fin d'une temporisation : si à l'issue d'une durée déterminée, cinq secondes par exemple, l'utilisateur n'a pas introduit un nouveau caractère, alors la chaîne des caractères précédemment introduits devient un message validé. Si le caractère correspond à une validation, l'ensemble des caractères introduits est validé et est affiché dans la zone Z1, la zone Z2 devenant alors vide. Dans le même temps, le terminal 1 de l'utilisateur envoie au terminal 2 le message validé (étape 3.7). Le message reçu par le terminal 2 est aussitôt affiché et apparaît dans la zone Z1 de l'écran du terminal 2.

A l'étape 3.8, le programme de messagerie teste si l'interface 8 a reçu du terminal 2 un signal informant de l'activité du deuxième terminal. Ce signal informe par exemple que l'interlocuteur vient d'introduire au moins un caractère sur son terminal. La réception d'un tel signal de travail déclenche selon l'art antérieur l'affichage d'une icône indiquant que l'interlocuteur est en train de répondre. A ce stade de l'enchaînement des étapes, un message est en cours d'élaboration au niveau du terminal 1 et donc les terminaux vont changer de mode de communication. Si ce n'est pas le cas, le programme de messagerie teste si l'interface 8 a reçu du terminal 2 une commande de changement d'état indiquant qu'au moins un terminal 2 a commuté en mode Temps Réel ou TR en abrégé (étape 3.9). Si ce n'est pas le cas, le programme de messagerie teste l'utilisateur a introduit une commande de changement d'état pour commuter manuellement son terminal en mode TR (étape 3.10). Si ce n'est pas le cas, le module de messagerie attend un nouveau caractère à concaténer au message en cours de composition (étape 3.11) et reboucle sur les étapes 3.8, 3.9, 3.10 et 3.11 tant que les réponses sont négatives. Si un nouveau caractère est introduit, le module saute à l'étape 3.5 d'affichage du caractère introduit et d'émission d'un signal de travail.

Dans ce schéma de déroulement des étapes, on peut remarquer qu'un utilisateur peut envoyer plusieurs messages validés sans recevoir de réponse, tout en restant dans le même mode de communication.

Si une réponse aux étapes 3.8, 3.9 ou 3.10 est positive, le terminal 1 de l'utilisateur commute en mode TR et envoie un signal aux terminaux des interlocuteurs pour informer du changement d'état (étape 3.12). En réponse à ce signal, tous les terminaux des interlocuteurs vont commuter en mode TR. Si le terminal 1 a reçu un signal indiquant qu'un terminal 2 a commuté dans le mode TR, alors il est inutile d'envoyer un tel signal puisqu'il a déjà été émis par le terminal 2. Selon une variante de réalisation, la commutation en mode TR intervient lors d'une réponse positive à l'étape 3.8 et après une durée déterminée au cours de laquelle au moins un autre signal d'activité est effectivement reçu, cette durée est par exemple de 30 secondes. Cette variante évite aux terminaux d'osciller rapidement entre les états D et TR, de cette manière les changements d'états ne peuvent intervenir qu'après la durée déterminée.

Dans ce schéma, dès réception du signal indiquant que le terminal 1 est passé en mode TR, les terminaux 2 des interlocuteurs passent aussi en mode TR. Lors de l'étape 3.12, le terminal 1 avertit son utilisateur que le mode de communication de son terminal est maintenant en temps réel, cette information s'effectue par un changement dans la zone Z3, c'est l'icône TR qui est graphiquement mise en évidence et l'icône D qui ne l'est plus. A l'étape 3.13, le module de messagerie est en attente d'un caractère tapé. Si l'utilisateur tape un caractère au clavier, le module de messagerie affiche ce caractère en partie supérieure de la zone Z2 et transmet au terminal 2 un signal de travail qui dans le mode TR contient le code du caractère tapé (étape 3.14). Si ce caractère est celui de validation du message, le message affiché en zone Z2 est transféré en zone Z1. Il en est de même au niveau de l'écran des terminaux 2 des interlocuteurs. A l'étape 3.15, le module de messagerie est en attente d'un caractère reçu, si le terminal 1 reçoit un signal contenant un caractère introduit au niveau d'un terminal 2 (étape 3.15), alors le caractère reçu est affiché en partie inférieure de la zone Z2 (étape 3.16). Si à l'étape 3.17, l'utilisateur introduit une commande pour changer d'état et passer en mode différé alors le programme de messagerie commute en mode différé et envoie un signal aux terminaux des interlocuteurs pour informer du changement d'état (étape 3.18). Dès réception de ce dernier signal, les autres terminaux participant à la communication commutent également en mode D. Nous verrons par la suite que d'autres évènements déclenchent la commutation du mode TR au mode D.

Le programme de messagerie reboucle constamment sur les étapes 3.13, 3 .15 et 3.17 tant qu'une commande n'est pas introduit ou qu'un signal de travail n'est pas reçu du terminal 2 d'un interlocuteur.

Selon un aspect particulier de l'invention, le terminal en mode D émet des signaux de travail sans le code du caractère tapé et, lorsque l'utilisateur valide la succession de caractères introduits, transmet l'ensemble des codes des caractères constituant le message validé. Dans le mode TR, le signal de travail contient le code du caractère tapé. Du point de vue de la communication, le caractère de validation est considéré comme n'importe quel caractère, par contre du point de vue de l'affichage, il déclenche le transfert du message de la zone Z2 à la zone Z1.

Dans ce qui précède, un utilisateur décide de revenir en mode différé en introduisant une commande au clavier. Selon une première variante, l'absence de réception d'un signal de travail pendant l'introduction d'un message en entier, déclenche le retour en mode différé. Selon un perfectionnement, il est possible de programmer le nombre de messages au cours desquels aucun signal de travail n'est reçu pour commuter en mode D. Selon une autre variante, le retour en mode différé est déclenché pour tous les terminaux connectés par une absence de signaux échangés entre les terminaux pendant une durée déterminée, une minute par exemple. Quelle que soit la variante de réalisation, les interlocuteurs sont informés d'une commutation automatique par l'extinction de l'icône TR et l'allumage de l'icône D.

### 5.4 Variantes sur l'interface utilisateur

Selon une variante illustrée par la **figure 4****,** en mode TR l'émission d'un signal de travail est déclenchée par l'introduction d'un mot composé d'un ou plusieurs caractères alphanumériques et encadré par deux caractères de séparation. Les caractères de séparation sont des caractères affichables qui ne sont pas alphanumériques, typiquement on trouve la barre d'espacement, les caractères de ponctuation, le caractère de validation, etc.

L'utilisateur du terminal 1 introduit le message composé des mots suivants : « abcde », « fghil », « k » « lmnopq » « rstux », « wxyz » séparés par des blancs ou caractères de ponctuation. Aux mêmes moments, son interlocuteur a également introduit sur son terminal 2 d'autres mots : « abc », « de », « fghijk », « lop », .... La zone Z2 affiche sur deux lignes les mots tapés par l'utilisateur et les mots reçus de son interlocuteur. Le fait de ne plus scinder les mots en caractères permet une meilleure lisibilité et donc une meilleure compréhension de ce que l'interlocuteur est en train de taper. De même que pour la figure 2, la présentation des mots sur les deux lignes prend en compte la chronologie de leurs introductions.

Selon une autre variante, en mode TR l'émission d'un signal de travail est déclenchée par l'introduction d'un nombre prédéterminé N de caractères du message, N étant supérieur ou égal à 2. Dans cette variante, en mode TR, les caractères du message sont transmis dans le signal de travail dès que l'utilisateur du terminal 1 a introduit N caractères du message. Par exemple, selon cette variante, en mode TR, les caractères sont transmis deux par deux ou trois par trois, etc. Nous décrivons ci-dessous les étapes modifiées du procédé de communication selon cette variante. Le reste du procédé de communication reste identique aux modes de réalisation décrits précédemment.

Selon cette variante, à l'étape 3.13 suite à la commutation dans le mode TR, un compteur CPT de nombres de caractères tapés est initialisé à 0. Au cours de l'étape 3.13, lorsque l'utilisateur tape un caractère au clavier, le compteur CPT est incrémenté de 1. Puis, au cours de l'étape 3.14, le module de messagerie affiche le caractère tapé dans la zone Z2 et vérifie si le compteur CPT atteint le nombre prédéterminé N de caractères ou si le caractère tapé correspond au caractère de validation. Si aucune de ces conditions n'est vérifiée, le module de messagerie retourne à l'étape 3.13 dans l'attente d'un caractère tapé. Si le compteur CPT atteint le nombre prédéterminé N de caractères tapé ou si le caractère tapé correspond au caractère de validation, le module de messagerie transmet au terminal 2 un signal de travail qui contient le code des caractères tapés depuis la commutation en mode TR ou depuis la transmission du précédent signal de travail au terminal 2. Le compteur CPT est ensuite remis à zéro. De manière similaire aux autres modes particuliers de réalisation de l'invention, si le caractère tapé est celui de validation du message, le message affiché en zone Z2 est transféré en zone Z1. Il en est de même au niveau de l'écran des terminaux 2 des interlocuteurs. A l'étape 3.15, le module de messagerie est en attente d'un nombre prédéterminé N de caractères reçus. Si le terminal 1 reçoit un signal contenant le nombre prédéterminé N de caractères introduits au niveau d'un terminal 2 (étape 3.15), alors les caractères reçus sont affichés en partie inférieure de la zone Z2 (étape 3.16).

Selon un perfectionnement, le module de messagerie comporte des boutons de commande permettant de mettre plus ou moins en évidence les caractères des parties supérieures ou inférieures de la zone 2. Ces boutons de commande permettent de mieux distinguer les caractères et mots tapés par l'utilisateur des caractères et mots reçus de l'interlocuteur. La distinction consiste par exemple à atténuer la brillance des éléments d'une partie et à augmenter celle de l'autre partie.

## Revendications

1. Procédé de communication de messages textuels entre au moins un premier et au moins un deuxième terminal (1,2) connectés par un réseau de communication (3), comprenant un premier mode de communication consistant à transmettre (3.5) du premier terminal (1) vers un deuxième terminal (2) l'ensemble des caractères d'un message validé, la transmission de l'ensemble des caractères étant déclenchée par la validation dudit message,
**caractérisé en ce que** ledit procédé comporte un second mode de communication intervenant en fonction de l'activité du premier terminal et de la réception d'un signal informant de l'activité d'un deuxième terminal, le second mode de communication consistant à transmettre (3.10) du premier terminal (1) vers un deuxième terminal (2) :
- chaque caractère d'un message, la transmission de chaque caractère étant déclenchée par son introduction (3.9) sur le premier terminal, ou
- un mot d'un message, ledit mot étant composé d'un ou plusieurs caractères alphanumériques et encadré par deux caractères de séparation, la transmission dudit mot étant déclenchée par son introduction (3.9) sur le premier terminal, ou
- un nombre prédéterminé de caractères d'un message, la transmission du nombre prédéterminé de caractères étant déclenchée lorsque le nombre prédéterminé de caractères a été introduit (3.9) sur le premier terminal.

2. Procédé de communication de messages textuels selon la revendication 1, **caractérisé en ce que** le second mode de communication intervient lorsqu'un message est en cours d'introduction sur le premier terminal et consécutivement à la réception d'un signal (3.8) indiquant l'introduction d'un caractère sur un deuxième terminal.

3. Procédé de communication de messages textuels selon la revendication 1 ou 2, **caractérisé en ce que** le second mode de communication intervient après une durée déterminée au cours de laquelle au moins un autre signal d'activité est reçu (3.8) par le premier terminal.

4. Procédé de communication de messages textuels selon l'une quelconque des revendications 1 à 3, **caractérisé en ce qu'**il comporte une étape d'introduction d'une commande pour commuter le premier terminal du second mode de communication vers le premier mode de communication.

5. Procédé de communication de messages textuels selon l'une quelconque des revendications 1 à 4, **caractérisé en ce que** la commutation du premier terminal du second mode de communication vers le premier mode de communication s'effectue par l'absence de réception de signal d'activité émis par un deuxième terminal lors de l'introduction d'un message en entier.

6. Procédé de communication de messages textuels selon l'une quelconque des revendications 1 à 5, **caractérisé en ce que** la commutation du premier terminal du second mode de communication vers le premier mode de communication s'effectue par l'absence de réception de signal d'activité émis par un deuxième terminal pendant une durée déterminée.

7. Procédé de communication de messages textuels selon l'une quelconque des revendications 1 à 6, **caractérisé en ce qu'**il comporte une étape d'affichage d'un menu d'introduction de message comportant une zone (Z2) affichant les messages en cours d'introduction, dans le second mode de communication, ladite zone (Z2) affiche les caractères introduits sur le premier terminal et les caractères introduits sur un deuxième terminal en les distinguant par une distinction graphique.

8. Procédé de communication de messages textuels selon la revendication 7, **caractérisé en ce que** la présentation des caractères dans ladite zone (Z2) respecte la chronologie de l'introduction des caractères sur le premier terminal et l'introduction des caractères introduits sur un deuxième terminal.

9. Procédé de communication de messages textuels selon l'une quelconque des revendications 1 à 8, **caractérisé en ce que** la commutation du premier mode de communication dans le second mode de communication d'un terminal déclenche une étape d'émission (3.12) par ce terminal d'un signal indiquant à l'au moins un deuxième terminal de commuter dans le second mode de communication.

10. Terminal (1) de communication comportant un moyen de communication (8) avec au moins un autre terminal (2) à travers un réseau de communication (3) et un moyen d'introduction (9,10) de caractères pour la création de messages à transmettre à au moins un autre terminal, **caractérisé en ce que** ledit terminal dispose de deux modes de communication, un premier mode consistant à transmettre l'ensemble des caractères lorsque le message est validé par le moyen d'introduction (9,10), un second mode de communication intervenant en fonction de l'activité du terminal et de la réception d'un signal par le moyen de communication (8) informant de l'activité d'un moins un autre terminal, le second mode de communication consistant à transmettre :
- chaque caractère d'un message lors de son introduction sur le moyen d'introduction (9,10), ou
- un mot d'un message, ledit mot étant composé d'un ou plusieurs caractères alphanumériques et encadré par deux caractères de séparation, lors de son introduction sur le moyen d'introduction (9, 10), ou
- un nombre prédéterminé de caractères d'un message, la transmission du nombre prédéterminé de caractères étant déclenchée lorsque le nombre prédéterminé de caractères a été introduit sur le moyen d'introduction (9, 10).

11. Programme d'ordinateur **caractérisé en ce qu'**il comprend des instructions de code de programme pour la mise en oeuvre d'une étape de communication de messages textuels dans le procédé selon l'une quelconque des revendications 1 à 9 lorsque ce programme est exécuté par un processeur.

## Patentansprüche

1. Verfahren zur Kommunikation von Textnachrichten zwischen mindestens einem ersten und mindestens einem zweiten Endgerät (1, 2), die durch ein Kommunikationsnetz (3) verbunden sind, umfassend einen ersten Kommunikationsmodus, der darin besteht, von dem ersten Endgerät (1) zu einem zweiten Endgerät (2) den Satz der Zeichen einer validierten Nachricht zu übertragen (3.5), wobei das Übertragen des Satzes der Zeichen durch ein Validieren der Nachricht ausgelöst wird,
**dadurch gekennzeichnet, dass** das Verfahren einen zweiten Kommunikationsmodus aufweist, der in Abhängigkeit von der Aktivität des ersten Endgeräts und dem Empfangen eines Signals, das über die Aktivität eines zweiten Endgeräts informiert, eingreift, wobei der zweite Kommunikationsmodus darin besteht, von dem ersten Endgerät (1) zu einem zweiten Endgerät (2) Folgendes zu übertragen (3.10):
- jedes Zeichen einer Nachricht, wobei das Übertragen von jedem Zeichen durch sein Eingeben (3.9) in das erste Endgerät ausgelöst wird, oder
- ein Wort einer Nachricht, wobei das Wort aus einem oder mehreren alphanumerischen Zeichen zusammengesetzt wird und durch zwei Trennzeichen eingerahmt wird, wobei das Übertragen des Wortes durch sein Eingeben (3.9) in das erste Endgerät ausgelöst wird, oder
- eine vorbestimmte Anzahl an Zeichen einer Nachricht, wobei das Übertragen der vorbestimmten Anzahl an Zeichen ausgelöst wird, wenn die vorbestimmte Anzahl an Zeichen in das erste Endgerät eingegeben worden ist (3.9).

2. Verfahren zur Kommunikation von Textnachrichten nach Anspruch 1, **dadurch gekennzeichnet, dass** der zweite Kommunikationsmodus eingreift, wenn eine Nachricht gerade in das erste Endgerät eingegeben wird und infolge des Empfangens eines Signals (3.8), das das Eingeben eines Zeichens in das zweiten Endgerät angibt.

3. Verfahren zur Kommunikation von Textnachrichten nach Anspruch 1 oder 2, **dadurch gekennzeichnet, dass** der zweite Kommunikationsmodus nach einer vorbestimmten Zeitdauer eingreift, während der mindestens ein anderes Aktivitätssignal von dem ersten Endgerät empfangen wird (3.8).

4. Verfahren zur Kommunikation von Textnachrichten nach Anspruch 1 bis 3, **dadurch gekennzeichnet, dass** es einen Schritt des Eingebens eines Befehls zum Umschalten des ersten Endgeräts von dem zweiten Kommunikationsmodus zu dem ersten Kommunikationsmodus aufweist.

5. Verfahren zur Kommunikation von Textnachrichten nach Anspruch 1 bis 4, **dadurch gekennzeichnet, dass** das Umschalten des ersten Endgeräts von dem zweiten Kommunikationsmodus zu dem ersten Kommunikationsmodus durch die Abwesenheit eines Empfangens eines Aktivitätssignals durchgeführt wird, das durch ein zweites Endgerät beim Eingeben einer Nachricht als Ganzes ausgesendet wird.

6. Verfahren zur Kommunikation von Textnachrichten nach Anspruch 1 bis 5, **dadurch gekennzeichnet, dass** das Umschalten des ersten Endgeräts von dem zweiten Kommunikationsmodus zu dem ersten Kommunikationsmodus durch die Abwesenheit eines Empfangens eines Aktivitätssignals durchgeführt wird, das durch ein zweites Endgerät während einer vorbestimmten Zeitdauer ausgesendet wird.

7. Verfahren zur Kommunikation von Textnachrichten nach Anspruch 1 bis 6, **dadurch gekennzeichnet, dass** es einen Schritt des Anzeigens eines Menüs der Nachrichteneingabe aufweist, das einen Bereich (Z2) aufweist, der die Nachrichten anzeigt, die in dem zweiten Kommunikationsmodus gerade eingegeben werden, wobei der Bereich (Z2) die Zeichen, die in das erste Endgerät eingegeben werden, und die Zeichen, die in ein zweites Endgerät eingegeben werden, anzeigt, indem er sie durch eine grafische Unterscheidung unterscheidet.

8. Verfahren zur Kommunikation von Textnachrichten nach Anspruch 7, **dadurch gekennzeichnet, dass** die Darstellung der Zeichen in dem Bereich (Z2) die Chronologie des Eingebens der Zeichen in das erste Endgerät und des Eingebens der Zeichen, die in ein zweites Endgerät eingegeben werden, einhält.

9. Verfahren zur Kommunikation von Textnachrichten nach einem der Ansprüche 1 bis 8, **dadurch gekennzeichnet, dass** das Umschalten von dem ersten Kommunikationsmodus in den zweiten Kommunikationsmodus eines Endgeräts einen Schritt des Sendens (3.12) eines Signals durch dieses Endgerät auslöst, das mindestens einem zweiten Endgerät angibt, in den zweiten Kommunikationsmodus umzuschalten.

10. Kommunikationsendgerät (1), umfassend ein Mittel (8) zur Kommunikation mit mindestens einem anderen Endgerät (2) über ein Kommunikationsnetz (3) und ein Mittel zum Eingeben (9, 10) von Zeichen zum Erzeugen von Nachrichten, die an mindestens ein anderes Endgerät zu übertragen sind, **dadurch gekennzeichnet, dass** das Endgerät über zwei Kommunikationsmodi verfügt, wobei ein erster Modus darin besteht, den Satz der Zeichen zu übertragen, wenn die Nachricht durch das Mittel zum Eingeben (9, 10) validiert ist, wobei ein zweiter Kommunikationsmodus in Abhängigkeit von der Aktivität des Endgeräts und dem Empfangen eines Signals durch das Mittel (8) zur Kommunikation, das über die Aktivität von mindestens einem anderen Endgerät informiert, eingreift, wobei der zweite Kommunikationsmodus darin besteht, Folgendes zu übertragen:
- jedes Zeichen einer Nachricht bei seinem Eingeben in das Mittel zum Eingeben (9, 10), oder
- ein Wort einer Nachricht, wobei das Wort aus einem oder mehreren alphanumerischen Zeichen zusammengesetzt ist und durch zwei Trennzeichen eingerahmt ist, bei seinem Eingeben in das Mittel zum Eingeben (9, 10), oder
- eine vorbestimmte Anzahl an Zeichen einer Nachricht, wobei das Übertragen der vorbestimmten Anzahl an Zeichen ausgelöst wird, wenn die vorbestimmte Anzahl an Zeichen in das Mittel zum Eingeben (9, 10) eingegeben worden ist.

11. Computerprogramm, **dadurch gekennzeichnet, dass** es Programmcodebefehle für das Ausführen eines Schrittes zur Kommunikation von Textnachrichten in dem Verfahren nach einem der Ansprüche 1 bis 9 aufweist, wenn das Programm von einem Prozessor ausgeführt wird.

## Claims

1. Method of communicating text messages between at least one first and at least one second terminal (1,2) connected by a communication network (3), comprising a first mode of communication consisting in transmitting (3.5) from the first terminal (1) to a second terminal (2) the set of characters of a validated message, the transmission of the set of characters being triggered by the validation of said message,
**characterized in that** said method comprises a second mode of communication intervening as a function of the activity of the first terminal and of the reception of a signal informing about the activity of a second terminal, the second mode of communication consisting in transmitting (3.10) from the first terminal (1) to a second terminal (2):
- each character of a message, the transmission of each character being triggered by its entry (3.9) on the first terminal, or
- a word of a message, said word being composed of one or more alphanumeric characters and flanked by two separation characters, the transmission of said word being triggered by its entry (3.9) on the first terminal, or
- a predetermined number of characters of a message, the transmission of the predetermined number of characters being triggered when the predetermined number of characters has been entered (3.9) on the first terminal.

2. Method of communicating text messages according to Claim 1, **characterized in that** the second mode of communication intervenes when a message is being entered on the first terminal and subsequent to the reception of a signal (3.8) indicating the entry of a character on a second terminal.

3. Method of communicating text messages according to Claim 1 or 2, **characterized in that** the second mode of communication intervenes after a determined duration in the course of which at least one other activity signal is received (3.8) by the first terminal.

4. Method of communicating text messages according to any one of Claims 1 to 3, **characterized in that** it comprises a step of entering a command to switch the first terminal from the second mode of communication to the first mode of communication.

5. Method of communicating text messages according to any one of Claims 1 to 4, **characterized in that** the switching of the first terminal from the second mode of communication to the first mode of communication occurs through the absence of reception of activity signal emitted by a second terminal during the entry of a message in full.

6. Method of communicating text messages according to any one of Claims 1 to 5, **characterized in that** the switching of the first terminal from the second mode of communication to the first mode of communication occurs through the absence of reception of activity signal emitted by a second terminal for a determined duration.

7. Method of communicating text messages according to any one of Claims 1 to 6, **characterized in that** it comprises a step of displaying a message entry menu comprising a zone (Z2) displaying the messages being entered, in the second mode of communication, said zone (Z2) displays the characters entered on the first terminal and the characters entered on a second terminal while distinguishing them through a graphical distinction.

8. Method of communicating text messages according to Claim 7, **characterized in that** the presentation of the characters in said zone (Z2) complies with the chronology of the entry of the characters on the first terminal and the entry of the characters entered on a second terminal.

9. Method of communicating text messages according to any one of Claims 1 to 8, **characterized in that** the switching of the first mode of communication into the second mode of communication of a terminal triggers a step of emission (3.12) by this terminal of a signal indicating to the at least one second terminal that it should switch into the second mode of communication.

10. Communication terminal (1) comprising a means (8) for communicating with at least one other terminal (2) through a communication network (3) and a means (9,10) for entering characters for the creation of messages to be transmitted to at least one other terminal, **characterized in that** said terminal has two modes of communication, a first mode consisting in transmitting the set of characters when the message is validated by the entry means (9,10), a second mode of communication intervening as a function of the activity of the terminal and of the reception of a signal by the communication means (8) informing about the activity of at least one other terminal, the second mode of communication consisting in transmitting:
- each character of a message during its entry on the entry means (9,10), or
- a word of a message, said word being composed of one or more alphanumeric characters and flanked by two separation characters, during its entry on the entry means (9, 10), or
- a predetermined number of characters of a message, the transmission of the predetermined number of characters being triggered when the predetermined number of characters has been entered on the entry means (9, 10).

11. Computer program **characterized in that** it comprises program code instructions for the implementation of a step of communicating text messages in the method according to any one of Claims 1 to 9 when this program is executed by a processor.
